# EUROPEAN PATENT APPLICATION

(11) **EP 4 461 437 A1**
(43) Date of publication of application: **13.11.2024**
(21) Application number: 23172085.5
(22) Date of filing: 08.05.2023
(51) Int. Cl.: B22F 1/068, B22F 1/102, B22F 7/06

(54) **COMPOSITION FOR FORMING A COPPER-CONTAINING INTERLAYER COMPRISING INTERNAL PORES**

(71) Applicant: CuNex GmbH, 85049 Ingolstadt (DE); Technische Hochschule Ingolstadt, 85049 Ingolstadt (DE)
(72) Inventor: BHOGARAJU, Sri Krishna, 85055 Ingolstadt (DE); ELGER, Gordon, 85053 Ingolstadt (DE)
(74) Representative: Dr. Gassner & Partner mbB

(57) **Abstract**

The invention concerns a composition for forming a copper-containing interlayer between a first solid substrate and a second solid substrate which composition comprises or consists of the following components:

An organic binder and copper-containing flakes of elementary metal, wherein the copper-containing flakes comprise internal pores, wherein the copper-containing flakes have a multi-layer lamellar structure.

## Description

The present invention relates to a composition for forming a copper-containing interlayer between a first solid substrate and a second solid substrate, a method for forming a copper-containing interlayer between a first solid substrate and a second solid substrate and a use of the composition. In the sense of the present invention an interlayer is to be understood as an interconnect layer, i. e. a solid metallic interconnection between the first solid substrate and the second solid substrate.

Die-attach bonding is a key process to realize high-temperature operation of power semiconductor devices. High Pb solders have been a preferred and well established choice over the past decades. However strict regulations concerning hazardous substances restrict the usage of high Pb solders and the few exceptions that exist today are also foreseen to be banned in the near future. With the increase in the usage of wide-bandgap (WBG) semiconductor devices, it is imperative to find sustainable and reliable alternatives both on the economical and the technical fronts. Interconnect materials and technologies need to be able to fulfill the challenging requirements of the WBG semiconductor devices and at the same time need to be economical for enabling mass production.

Currently, there are two established methods to produce high-temperature bonds while benefiting from the comparatively low-temperature bonding temperature: Transient liquid phase (TLP) bonding and particle sintering. Although various studies reported successful production of an in-situ phase with a higher re-melting point, thermo-mechanical fracture behavior of TLP bonded joint appeared to have a major drawback. That is due to microstructure of the TLP bonded joint as it is made of brittle intermetallic compounds (IMCs). However, for the case of particle sintering, there are promising reports that suggest Ag-sintered joint as a candidate for high-temperature WBG applications. During sintering, it is possible to realize a connection, which consists of one metal throughout. Beside the high thermal conductivity of the material, the advantage is that the interconnect is established at relative low temperature (250 °C) but is stable at higher temperature (over 300 °C). However, sintered Ag particles have its own drawbacks: High cost and low-electromigration resistance.

Copper is approximately 100 times cheaper than silver and also more abundant, easily recyclable and easily available. Copper has an overall lower carbon footprint than silver. It has a lower co-efficient of thermal expansion than silver and has nearly the same electrical and thermal conductivities. However, the higher melting point of copper means that the sintering temperatures are also slightly higher than in case of silver. Furthermore, the susceptibility to oxidize quickly under atmosphere is a major drawback when using copper as this is detrimental to the mechanical and thermal integrity of the joint.

Bhogaraju, S. K. et al. "Copper die bonding using copper formate based pastes with alpha-terpineol, amino-2-propanol and hexylamine as binders", 2020 IEEE 8th Electronics System-Integration Technology Conference (ESTC), 2020, pp. 1-7, discloses copper pastes based on Cu(II) formate tetrahydrate mixed with either PEG600, alpha-terpineol, amino-2-propanol or hexylamine as binder. After completion of the thermal decomposition process, the formation of pure metal copper nanoparticles is observed. The average shear strength values of the sinter pastes were 30 MPa, 9 MPa, 2 MPa for the binders PEG600, alpha-terpineol and amino-2-propanol, respectively, whereas hexylamine as binder established no sufficient bond strength to perform shear tests.

Bhogaraju, S. K. et al. "Die-attach bonding for high temperature applications using thermal decomposition of copper(II) formate with polyethylene glycol", Scr. Mater. 2020, 182, 74-80, discloses copper pastes based on Cu(II) formate mixed with either PEG600, alpha-terpineol or a mixture of alpha-terpineol and polyvinyl butyral. From the tested sintering pastes, the Cu(II) formate/PEG600 paste at a weight ratio of 63/37 showed the highest shear strength value of 60 MPa. In addition, thermal decomposition of Cu(II) formate results in the *in situ* formation of copper nanoparticles.

According to Bhogaraju, S. K. et al. "Novel approach to copper sintering using surface enhanced brass micro flakes for microelectronics packaging", Journal of Alloys and Compounds, Volume 844, 2020, 156043, etched copper or brass flakes were mixed with PEG600 as binder to obtain a paste formulation. The use of PEG600 in the paste formulation enables the *in situ* reduction of Cu oxides during sintering.

Bhogaraju, S. K. et al. "Die-attach bonding with etched micro brass metal pigment flakes for high-power electronics packaging", ACS Appl. Electron. Mater. 2021, 3, 10, 4587-4603, discloses a sinter paste composed of etched microscale brass metal pigment flakes and a binder mixture of alpha-terpineol and polyethylene glycol 600 (PEG600).

EP 3 626 785 B1 discloses a metal paste comprising 65 to 85 % by weight of metal particles and 10 to 35 % by weight of organic solvent, wherein 70 to 100 % by weight of the metal particles consist of organically coated copper flakes comprising a specific surface in the range of 1.9 to 3.7 m²/g, a total oxygen content in the range of 2 to 4 % by weight, and a total carbon to total oxygen weight ratio in the range of 0.25 to 0.9. The proportion of organic coating can be in the range of 2 to 5% by weight, based on the weight of the organically coated copper flakes.

US 2014/0287158 A1 discloses a conductive paste for screen application having a mixture of copper flake having a mean diameter between 1 µm to 8 µm and copper nanoparticles having a mean diameter from 10 nm to 100 nm, wherein the ratio of the copper flake to the nanoparticles is between 2:1 and 5:1 by weight, and a resin comprising about half of a polymer having a molecular weight in excess of 10.000 and one or more solvents.

The problem to be solved by the present invention is to provide an alternative composition for forming a copper-containing interlayer between a first solid substrate and a second solid substrate, an alternative method for forming a copper-containing interlayer between a first solid substrate and a second solid substrate and a use of the alternative composition. The alternative composition shall allow die-attach bonding, the formation of an electrically and/or thermally conductive path on a solid substrate and substrate attachment. The alternative composition and the alternative method shall enable sintering with short sintering times, with low sintering temperature and/or with low sintering pressure. Sintering of the alternative composition shall result in a copper-containing interlayer having a high resistance against thermo-mechanical fatigue, a high thermal conductivity and a high electrical conductivity.

The problem is solved by the subject-matter of claims 1, 12 and 15. Embodiments of the invention are subject-matter of claims 2 to 11 and claims 13 and 14.

According to the invention a composition for forming a copper-containing interlayer between a first solid substrate and a second solid substrate is provided. The composition comprises or consists of the following components:
An organic binder and copper-containing flakes of elementary metal. The copper-containing flakes comprise internal pores. The copper-containing flakes have a multi-layer lamellar structure.

The inventors of the present invention found that copper-containing flakes comprising internal pores result in an interlayer after sintering which interlayer has an increased stress absorption compared to an interlayer obtained with copper-containing flakes without internal pores. Thus, due to the internal pores, the interlayer resulting from the copper-containing flakes comprising internal pores is able to efficiently absorb thermo-mechanical stress applied to the interlayer. In the context of the present invention, thermo-mechanical stress refers to the stress generated in the interlayer due to a mismatch in coefficients of thermal expansion, i.e. due to different expansion and shrinkage of the first and the second solid substrate and the interlayer caused by thermal effects during and after sintering and/or during operation of a device containing the interlayer between the first and the second solid substrate. Furthermore, the inventors of the present invention found that also mechanical stress applied to the interlayer is efficiently absorbed by an interlayer resulting from copper-containing flakes comprising internal pores due to a sponge-like microstructure of the interlayer, compared to an interlayer obtained with copper-containing flakes without internal pores. The interlayer resulting from the composition according to the invention after sintering shows an improved resistance against thermo-mechanical fatigue compared to interlayers resulting from compositions comprising copper-containing flakes without internal pores. In the context of the present invention, thermo-mechanical fatigue refers to the overlay of a cyclical mechanical loading, that leads to fatigue of a material, with a cyclical thermal loading. Thus, the interlayer resulting from the composition according to the invention shows a good thermo-mechanical performance, in particular if a relatively high thermo-mechanical stress and/or a relatively high mechanical stress is applied on the interlayer, and thus ensures a good reliability.

Furthermore, the inventors found that the thermal conductivity and the electrical conductivity of the interlayer resulting from the composition according to the invention after sintering is not affected by the internal pores compared to interlayers resulting from compositions comprising copper-containing flakes without internal pores. Thus, the composition according to the invention also shows to result in an interlayer after sintering having a relatively high thermal conductivity and a relatively high electrical conductivity.

The inventors of the present invention further found that the internal pores of the copper-containing flakes are maintained during and after sintering of the composition according to the invention. Due to the good thermo-mechanical performance, a rapid cooling of the copper-containing interlayer from the sintering temperature to a cooling temperature does not cause an overstressing of the copper-containing interlayer. Therefore, no fractures are formed in the copper-containing interlayer during and after rapid cooling, in particular after sintering and/or during thermal shock testing.

The inventors of the present invention further found that copper-containing flakes having a multi-layer lamellar structure enable sintering within a relatively short sintering time, in particular within a sintering time of at most 5 minutes, with a relatively low sintering temperature, in particular with a sintering temperature of at most 250 °C, and/or with a relatively low sintering pressure, in particular with a sintering pressure of at most 15 MPa, compared to copper-containing flakes having no lamellar structure, in particular having no multi-layer lamellar structure. This is enabled by the relatively large surface area of the flakes having a multi-layer lamellar structure which results in improved densification and rapid grain growth of the copper-containing flakes in the composition according to the invention during sintering. The multi-layer lamellar structure of a copper-containing flake can be determined by surface analysis, in particular by metal surface analysis, and/or by analysis of cross-sections of the copper-containing flakes. The surface analysis, in particular the metal surface analysis, of the copper-containing flakes can comprise microscopic morphology analysis, surface structure analysis, surface elemental composition analysis and depth analysis. The surface analysis and/or the analysis of cross-sections can be performed for example by scanning electron microscopy (SEM), x-ray diffraction (XRD), scanning tunneling microscopy (STM), transmission electron microscopy (TEM), x-ray photoelectron spectroscopy (XPS), glow discharge spectrometry and image-based metal surface inspection. These methods can also be applied to the surface analysis and/or the analysis of cross-sections of the copper-containing interlayer and/or of the composition according to the invention before and/or after sintering.

The elementary metal from which the copper-containing flakes is formed may be copper or a copper alloy. In particular, the copper alloy may be bronze or brass. If the elementary metal is a copper alloy, a good thermal conductivity of the composition according to the invention is enabled, which can be further increased if the elementary metal is elemental copper. In particular, the brass may be a brass containing at least 0.5 wt.% zinc, in particular at least 1 wt.% zinc, and at most 36 wt.% zinc, in particular at most 30 wt.% zinc, in particular at most 25 wt.% zinc, in particular at most 20 wt.% zinc, in particular at most 15 wt.% zinc. In particular, the brass may be alpha-brass containing at most 36 wt.% zinc. In particular, the bronze may be a bronze containing at least 0.5 wt.% tin, in particular at least 1 wt.% tin, and at most 20 wt.% tin, in particular at most 15 wt.% tin, in particular at most 10 wt.% tin, in particular at most 5 wt.% tin. The purity of the elementary metal may be at least 93 %, in particular at least 95 %, in particular at least 99 %, in particular at least 99.95 %, and at most 99.99 %.

The copper-containing flakes of elementary metal, in particular copper, may be single crystal copper-containing flakes of elementary metal or polycrystalline copper-containing flakes of elementary metal. The copper-containing flakes of elementary metal may be fully or partially oriented in a single crystallographic orientation, in particular in a 111 crystallographic orientation, or may have a fully or partially disordered crystal structure.

The copper-containing flakes may have a mean particle size D50 determined by laser granulometry of at least 1 µm, in particular at least 2 µm, in particular at least 3 µm, and at most 10 µm, in particular at most 7 µm, in particular at most 5 µm, in particular at most 4 µm. The laser granulometry may be performed by use of laser diffraction measurement according to the specifications of ISO 13320 "Particle size analysis - laser diffraction methods". The laser diffraction measurement can be performed by means of a Helos^{™} laser diffractometer from the company Sym-patec GmbH, 38678 Clausthal-Zellerfeld, Germany. The mean particle size D50 is the corresponding particle size when the cumulative percentage reaches 50%. For example, for a powder sample with D50 = 50 µm, it means 50% of particles are larger than 50 µm and 50% particles are smaller than 50 µm.

The copper-containing flakes may be obtained by grinding in a ball mill and may have a lamellar shape, an irregular shape or a cornflake-like shape. The inventors of the present invention found that the lamellar shape, the irregular shape or the cornflake-like shape of the copper-containing flakes, in particular of the copper-containing flakes having a mean particle size D50 of at most 5 µm, in particular a mean particle size D50 of at most 4 µm, in particular a mean particle size D50 of at most 3 µm, results in better contact surfaces compared to spherical microparticles. The lamellar shape, the irregular shape or the cornflake-like shape also results in a larger surface area of the copper-containing flakes, which leads to improved densification and coarsening of the copper-containing flakes during sintering. This further promotes the formation of sinter necks and allow material transport during sintering. Any one of the copper-containing flakes may independently from each other have a thickness in the range of 5 nm to 400 nm, in particular in the range of 20 nm to 350 nm, in particular in the range of 50 nm to 300 nm, in particular in the range of 100 nm to 275 nm, in particular in the range of 150 nm to 250 nm, in particular in the range of 175 nm to 200 nm.

An internal pore is defined as void space in the flake which is not filled with metal, in particular the elementary metal. Any one of the internal pores may have a diameter in the range of 2 nm to 30 nm, in particular in the range of 3 nm to 25 nm, in particular in the range of 5 nm to 20 nm, in particular in the range of 10 nm to 15 nm. The inventors of the present invention found that the number of internal pores allows a relatively high stress absorption, in particular a relatively high thermo-mechanical and/or mechanical stress absorption, of temperatures and/or pressures applied on the interlayer formed from the composition. This stress absorption by the internal pores of the copper-containing flakes allows a relatively high resistance against thermo-mechanical fatigue and thus a good thermo-mechanical performance of the interlayer formed from the composition according to the invention. The diameter of an internal pore can be measured for example by gravimetric analysis, by computed tomographic analysis or by image-based analysis.

The copper-containing flakes comprising internal pores in the composition according to the invention may have a mean intraparticle pore density in a range of 2 internal pores/µm² to 30 internal pores/µm², in particular in a range of 3 internal pores/µm² to 25 internal pores/µm², in particular in a range of 5 internal pores/µm² to 20 internal pores/µm², in particular in a range of 7 internal pores/µm² to 18 internal pores/µm², in particular in a range of 10 internal pores/µm² to 15 internal pores/µm², in particular in a range of 12 internal pores/µm² to 13 internal pores/µm², in an arbitrary section, in particular in any arbitrary section, through any of the flakes. In particular, the copper-containing flakes comprising internal pores in the composition according to the invention may have a mean intraparticle pore density in a range of 10 internal pores/µm² to 30 internal pores/µm², in particular in a range of 15 internal pores/µm² to 20 internal pores/µm², in an arbitrary section, in particular in any arbitrary section, through any of the flakes. In the context of the present invention, the mean intraparticle pore density of a flake is defined as the mean of the number of internal pores in relation to an area of an arbitrary section through any of the flakes. The inventors of the present invention found that the mean intraparticle pore density of the flakes in the composition according to the invention is not affected by sintering of the composition according to the invention. Thus, also the sintered flakes in the copper-containing interlayer/interconnect layer between the two solid substrates and thus the interlayer/interconnect layer itself may have a mean intraparticle pore density in the range of 2 internal pores/µm² to 30 internal pores/µm², in particular in the range of 3 internal pores/µm² to 25 internal pores/µm², in particular in the range of 5 internal pores/µm² to 20 internal pores/µm², in particular in the range of 7 internal pores/µm² to 18 internal pores/µm², in particular in the range of 10 internal pores/µm² to 15 internal pores/µm², in particular in the range of 12 internal pores/µm² to 13 internal pores/µm², in an arbitrary section, in particular in any arbitrary section, through the interlayer/interconnect layer. In particular, also the sintered flakes in the copper-containing interlayer/interconnect layer between the two solid substrates and thus the interlayer/interconnect layer itself may have a mean intraparticle pore density in the range of 10 internal pores/µm² to 30 internal pores/µm², in particular in the range of 15 internal pores/µm² to 20 internal pores/µm², in an arbitrary section, in particular in any arbitrary section, through the interlayer/interconnect layer. Though single particles or flakes are sintered together in the interlayer/interconnect layer such that no single particles/flakes are present in the interlayer/interconnect layer, the term "intraparticle pore density" has been maintained since the origin of the pores is in the particles/flakes. The mean intraparticle pore density of the copper-containing flakes can be measured for example by gravimetric analysis, by computed tomographic analysis or by image-based analysis. The mean intraparticle pore density of the copper-containing flakes can be determined for example by using the following method:
1. Embedding the copper-containing flakes in a resin, in particular in an epoxy resin,
2. preparing ultrathin sections of the embedded flakes,
3. taking transmission electron microscopic (TEM) photographs and/or scanning electron microscopy (SEM) photographs of the ultrathin sections of the embedded flakes,
4. determining a plurality of intraparticle pore densities by calculating the number of internal pores within the ultrathin sections of the flakes in relation to the total area of these ultrathin sections of the flakes, in a plurality of TEM photographs and/or in a plurality of SEM photographs, and
5. calculating the mean of the plurality of intraparticle pore densities determined in this way.

In this connection, step 4 can be effected by means of a computer-assisted image analysis of the TEM photographs and/or the SEM photographs.

The inventors of the present invention found that copper-containing flakes having a mean intraparticle pore density in the range of 2 internal pores/µm² to 30 internal pores/µm², in particular in the range of 5 internal pores/µm² to 20 internal pores/µm², result in an increased resistance against thermo-mechanical fatigue of the interlayer in contrast to that of an interlayer obtained from copper-containing flakes having no internal pores. Furthermore, the thermal conductivity and the electrical conductivity of the interlayer obtained from copper-containing flakes having a mean intraparticle pore density in the range of 2 internal pores/µm² to 30 internal pores/µm², in particular in the range of 5 internal pores/µm² to 20 internal pores/µm², is not affected by the internal pores. It is identical or nearly identical to that of an interlayer obtained from copper-containing flakes having no internal pores. Thus, due to the copper-containing flakes having a mean intraparticle pore density in the range of 2 internal pores/µm² to 30 internal pores/µm², in particular in the range of 5 internal pores/µm² to 20 internal pores/µm², a relatively high thermo-mechanical performance, a relatively high thermal conductivity and a relatively high electrical conductivity of the interlayer obtained from the composition according to the invention by sintering is enabled. The mean intraparticle pore density in the range of 2 internal pores/µm² to 30 internal pores/µm², in particular in the range of 5 internal pores/µm² to 20 internal pores/µm², of the copper-containing flakes is not affected by sintering of the composition according to the invention. The resulting relatively high thermo-mechanical performance allows a rapid cooling of the copper-containing interlayer/interconnect layer from the sintering temperature to a cooling temperature within a short period of time without causing an overstressing of the copper-containing interlayer, e.g. without fracture formation in the copper-containing interlayer.

Furthermore, in the context of the present invention, the internal pores of the copper-containing flakes do not refer to superficial recesses on any surface of the copper-containing flakes formed for example by etching of the copper-containing flakes. Superficial recesses are only present on a surface of the copper-containing flake and are not self-contained, closed internal pores inside the copper-containing flake. The internal pores are totally surrounded by the elementary metal. Thus, the internal pores are not present on the surface and do not have any connection with the surface of the copper-containing flakes. Furthermore, the internal pores are not formed by means of etching, in particular with an acid, of the copper-containing flakes.

In contrast to the mean intraparticle pore density, the mean interparticle cavity density in the context of the present invention is defined as the mean percentage of area between the sintered copper-containing flakes from the total area in a cross-section of the interlayer formed from the composition according to the invention. The area between the sintered copper-containing flakes is not filled, in particular not filled with the elementary metal. The mean interparticle cavity density of the copper-containing flakes in this interlayer, in particular at the beginning of the sintering of the flakes, may be in the range of 5 % to 50 %, in particular in the range of 10 % to 45 %, in particular in the range of 15 % to 40 %, in particular in the range of 20 % to 35 %, in particular in the range of 25 % to 30 %. The mean interparticle cavity density of the copper-containing flakes in the interlayer can be measured for example by scanning electron microscopy (SEM) analysis, by computed tomographic analysis or by image-based analysis of cross-sections of the interlayer. In this regard, cross-sections of the interlayer can be prepared by ion beam milling to avoid smudging or clogging of the internal pores and/or of the interparticle cavities. The mean interparticle cavity density of the copper-containing flakes in the interlayer can be determined for example by using the following method:
1. Preparing ultrathin sections of the interlayer,
2. taking SEM photographs of these ultrathin sections,
3. determining a plurality of interparticle cavity densities by calculating the area between the copper-containing flakes that is not filled with the elementary metal within the ultrathin sections in relation to the total area of these ultrathin sections of the interlayer in a plurality of SEM photographs, and
4. calculating the mean of the plurality of interparticle cavity densities which have been determined in this way.

In this connection, step 3 can be effected by means of a computer-assisted image analysis of the SEM photographs.

The inventors of the present invention found that although the mean intraparticle pore density of the copper-containing flakes is not affected during sintering of the composition according to the invention, the mean interparticle cavity density of the copper-containing flakes in the composition according to the invention decreases during sintering of the composition according to the invention. In this regard, the decrease in the mean interparticle cavity density is dependent on the sintering time, the pressure applied during sintering and the sintering temperature. The pressure applied during sintering of the composition between a first solid substrate and a second solid substrate is usually a bonding pressure applied to press the first substrate and the second substrate against one another. A relatively long sintering time, a relatively high pressure applied during sintering and/or a relatively high sintering temperature results in a relatively high decrease in the mean interparticle cavity density. After sintering of the composition according to the invention, the mean interparticle cavity density in the copper-containing interlayer/interconnect layer may be in the range of 0.5 % to 45 %, in particular in the range of 1 % to 45 %, in particular in the range of 5 % to 40 %, in particular in the range of 10 % to 35 %, in particular in the range of 15 % to 30 %, in particular in the range of 20 % to 25 %. The decrease in the mean interparticle cavity density during sintering of the composition according to the invention can result in the total or nearly total disappearance of interparticle pores in the copper-containing interlayer/interconnect layer.

The copper-containing flakes stack in uniform stacking patterns, in particular by horizontally stacking over each other. Thus, a relatively large surface contact between these copper-containing flakes is provided. The relatively large surface contact between the copper-containing flakes allows sintering within a relatively short sintering time, at a relatively low sintering pressure and/or at a relatively low sintering temperature. Furthermore, the copper-containing flakes show a relatively high surface energy. The surface energy can be defined as the excess energy at the surface of a material compared to the bulk of the material.

The copper-containing flakes can be purchased as Cubrotec 8001 copper flakes, which are offered by the company Carl Schlenk SE, Germany.

The multi-layer lamellar structure may comprise or consist of at least two, in particular at least three, in particular at least four, in particular at least five, in particular at least six, in particular at least seven, in particular at least eight, and of at most 20, in particular at most 18, in particular at most 16, in particular at most 14, in particular at most 12, in particular at most 11, in particular at most ten, in particular at most nine, lamellas. Any one of the lamellas may independently from each other have a thickness in the range of 5 nm to 20 nm, in particular in the range of 6 nm to 18 nm, in particular in the range of 8 nm to 16 nm, in particular in the range of 10 nm to 14 nm, in particular in the range of 11 nm to 13 nm. The number of lamellas in the multi-layer lamellar structure and/or the thickness of any of the lamellas in the multi-layer lamellar structure can be determined by analysis of cross-sections of the copper-containing flakes. The analysis of cross-sections can be performed for example by SEM or TEM of cross-sections of the copper-containing flakes. The number of lamellas in the multi-layer lamellar structure of the copper-containing flakes can be determined for example by using the following method:
1. Embedding the copper-containing flakes in a resin, in particular in an epoxy resin,
2. preparing ultrathin sections of the embedded flakes,
3. taking transmission electron microscopic (TEM) photographs and/or scanning electron microscopy (SEM) photographs of the ultrathin sections of the embedded flakes, and
4. counting the number of lamellas in a multi-layer lamellar structure within the ultrathin sections of the flakes in the TEM photographs and/or in the SEM photographs.

In this connection, step 4 can be effected by means of a computer-assisted image analysis of the TEM photographs and/or the SEM photographs.

The multi-layer lamellar structure may extend over the entire copper-containing flake or over a portion of the copper-containing flake. The multi-layer lamellar structure may have a total thickness of at least 20 nm, in particular at least 50 nm, in particular at least 100 nm, and of at most 400 nm, in particular at most 350 nm, in particular at most 300 nm, in particular at most 250 nm, in particular at most 200 nm.

The elementary metal forming the lamellas may have a nanocrystalline structure comprising or consisting of nano grains. The elementary metal forming the lamellas is identical to the elementary metal forming the copper-containing flakes. The nano grain size may be in the range of 5 nm to 100 nm, in particular in the range of 10 nm to 90 nm, in particular in the range of 15 nm to 80 nm, in particular in the range of 20 nm to 70 nm, in particular in the range of 25 nm to 60 nm, in particular in the range of 30 nm to 50 nm, in particular in the range of 35 nm to 40 nm. If the elementary metal forming the lamellas has a nanocrystalline structure comprising or consisting of nano grains, rapid grain growth of the copper-containing flakes is enabled during sintering. In this regard, the rapid grain growth is particularly pronounced during the later stages of sintering, when the interparticle cavity density decreases and interparticle pores in the copper-containing interlayer/interconnect layer totally or nearly totally disappear. In those later stages of sintering, grain boundary migration becomes the dominant process mechanism for grain growth which is particularly pronounced, if the elementary metal forming the lamellas has a nanocrystalline structure comprising or consisting of nano grains. Thus, sintering within a relatively short sintering time, with a relatively low sintering pressure and/or with a relatively low sintering temperature is facilitated, if the elementary metal forming the lamellas has a nanocrystalline structure comprising or consisting of nano grains.

Within the multi-layer lamellar structure, each of the lamellas may be in contact with (an)other lamella(s) by at least one lamellar boundary. Furthermore, lamellas may be part of one layer bend around at the edge of the flake. This means that the lamellas form a unit in the form of the copper-containing flake having the multi-layer lamellar structure.

The copper-containing flakes may be coated with stearic acid. The total weight of stearic acid in relation to the total weight of the copper-containing flakes coated with stearic acid may be at least 0.001 wt.%, in particular at least 0.005 wt.%, in particular at least 0.01 wt.%, in particular at least 0.05 wt.%, in particular at least 0.075 wt.%, and at most 1.5 wt.%, in particular at most 1.25 wt.%, in particular at most 1 wt.%, in particular at most 0.75 wt.%, in particular at most 0.5 wt.%, in particular at most 0.25 wt.%, in particular at most 0.1 wt.%. In particular, the total weight of stearic acid in relation to the total weight of the copper-containing flakes coated with stearic acid may be at most 1.5 wt.%. The inventors of the present invention found that the stearic acid coated on the surface of the copper-containing flakes prevents an agglomeration and cold welding of the copper-containing flakes. However, due to the boiling point of 361 °C, this stearic acid on the surface of the copper-containing flakes does not evaporate during the sintering. Copper-containing particles coated with an organic coating agent, in particular stearic acid, normally demonstrate a relatively low sintering efficacy. The inventors of the present invention found that a relatively low sintering efficacy occurs only if the composition comprises copper-containing flakes coated with a relatively high total weight of stearic acid in relation to the total weight of the copper-containing flakes coated with the stearic acid, in particular a total weight of the stearic acid in relation to the total weight of the copper-containing flakes coated with stearic acid of more than 1.5 wt.%.

The inventors of the present invention found that the relatively low total weight of stearic acid, i. e. at most 1.5 wt.% stearic acid, in relation to the total weight of the copper-containing flakes coated with stearic acid in the composition is sufficient for preventing agglomeration and cold welding of the copper-containing flakes and also improves sintering of these flakes. The inventors further found that the composition comprising copper-containing flakes coated with a relatively low total weight of stearic acid, i. e. at most 1.5 wt.% stearic acid, in relation to the total weight of the copper-containing flakes coated with stearic acid shows an improved particle contact during sintering of the composition in contrast to a composition comprising copper-containing flakes coated with a relatively high total weight of stearic acid, in particular at least 1.6 wt.% stearic acid, in particular at least 2 wt.% stearic acid, in relation to the total weight of the copper-containing flakes coated with stearic acid. Thus, the composition comprising copper-containing flakes coated with a relatively low total weight of stearic acid, i. e. at most 1.5 wt.% stearic acid, in relation to the total weight of the copper-containing flakes coated with stearic acid enables an improved sinter neck formation and thus allows sintering with short sintering times, with low sintering temperature and/or with low sintering pressure.

Furthermore, in contrast to copper-containing flakes without an organic coating, in particular copper-containing flakes without a stearic acid coating, the copper-containing flakes coated with a relatively low total weight of stearic acid, i. e. at most 1.5 wt.% stearic acid, in relation to the total weight of the copper-containing flakes coated with stearic acid in the composition do not agglomerate, in particular do not agglomerate in a method for forming the composition and/or do not agglomerate during storage and during applying of the composition to a first substrate. Agglomeration(s) of the copper-containing flakes result(s) in an inhomogeneous and inconsistent application of the composition to the first substrate and also to an insufficient attachment of a second substrate placed on the composition, in particular if the composition on the first substrate or the first substrate and/or the second substrate together with the composition are heated to a pre-drying temperature before sintering. Pre-drying results in an evaporation, in particular a partial evaporation, of the organic binder in the composition and thus in case of copper-containing flakes without an organic coating a pronounced agglomeration of the copper-containing flakes. A pronounced agglomeration of the copper-containing flakes results in an inhomogeneous distribution of the composition on the first substrate which can lead to device cracking during placement of the second substrate, in particular during placement of highly sensitive and relatively thin devices such as LEDs and diodes. Furthermore, the contact surface between the applied composition and the placed second substrate is relatively small due to the inhomogeneity caused by the agglomerated copper-containing flakes. This results in a non-uniform pressure distribution during sintering and thus in a non-uniform sintering.

Thus, by preventing the agglomeration of the copper-containing flakes in the composition, a homogenous and consistent applicability, in particular printability, and a sufficient attachment of the second substrate placed on the composition according to the invention is enabled, in particular if the composition on the first substrate or the first substrate and/or the second substrate together with the composition are heated to a pre-drying temperature before sintering. Thus, after sintering, a sufficient copper bond between the first substrate and the second substrate with a relatively high arithmetic average shear strength value is enabled by the composition comprising copper-containing flakes coated with a relatively low total weight of stearic acid, i. e. at most 1.5 wt.% stearic acid, in relation to the total weight of the copper-containing flakes coated with stearic acid. Furthermore, a composition comprising copper-containing flakes coated with a relatively high total weight of stearic acid, in particular at least 1.6 wt.% stearic acid, in particular at least 2 wt.% stearic acid, results in a reduced wettability of the first substrate, in particular by the organic binder, during applying of the composition. This results in the adhesive force of the organic binder to the first substrate being stronger than the cohesive force of the organic binder within the composition, resulting in an effect usually designated as bleed-out. Bleed-out of the organic binder results in the organic binder being unevenly distributed on the first substrate when the composition is applied on the first substrate, and copper-containing flakes being entrained due to the uneven distribution of the organic binder on the first substrate. Furthermore, a reduced wettability of the first substrate results in contaminations, in particular contaminations by copper sublimation, after sintering and hinders the surface diffusion during sintering, in particular during sintering at a relatively low temperature, in particular a temperature of at most 250 °C, in particular of at most 225 °C. Thus, the composition according to the invention comprising copper-containing flakes coated with a relatively low total weight of stearic acid in relation to the total weight of the copper-containing flakes coated with stearic acid, shows an improved processability and an improved sintering efficacy compared to compositions comprising copper-containing flakes without an organic coating and compared to compositions comprising copper-containing flakes coated with a relatively high total weight of stearic acid, in particular at least 2 wt.% stearic acid, in relation to the total weight of the flakes coated with stearic acid.

The inventors of the present invention found that the copper-containing flakes are distributed uniformly in the copper-containing interlayer between the first solid substrate and the second solid substrate after the sintering process. This allows an efficient formulation of the composition according to the invention, an improved applicability, in particular printability, of the composition according to the invention on the first substrate and an improved placing of the second substrate on the composition according to the invention. Furthermore, the composition according to the invention enables a relatively good surface control of the sintered copper-containing interlayer by ensuring a relatively low surface roughness and an uniform bond thickness of the copper-containing interlayer, in particular during and/or after sintering. Furthermore, if the copper-containing flakes are coated with a relatively low total weight of stearic acid, i. e. at most 1.5 wt.% stearic acid, in relation to the total weight of the copper-containing flakes coated with stearic acid, agglomeration of the copper-containing flakes is prevented and thus, the uniform distribution of the copper-containing flakes in the copper-containing interlayer between the first solid substrate and the second solid substrate after the sintering process is further improved. This further improves the applicability, in particular printability, of the composition on the first substrate and the placing of the second substrate on the composition. Furthermore, also the surface control of the sintered copper-containing interlayer by ensuring a relatively low surface roughness and an uniform bond thickness of the copper-containing interlayer, in particular during and/or after sintering is further improved, if the copper-containing flakes are coated with a relatively low total weight of stearic acid, i. e. at most 1.5 wt.% stearic acid, in relation to the total weight of the copper-containing flakes coated with stearic acid.

The inventors of the present invention found that besides the multi-layer lamellar structure of the copper-containing flakes, also the following properties of the copper-containing flakes in the composition according to the invention each contribute to enabling sintering within a relatively short sintering time, at a relatively low sintering pressure and/or at a relatively low sintering temperature as indicated above: A relatively large surface contact due to the uniform stacking pattern by the copper-containing flakes in the composition according to the invention, the elementary metal forming the lamellas having a nanocrystalline structure comprising or consisting of nano grains, and a coating of the copper-containing flakes with a relatively low total weight of stearic acid, i. e. at most 1.5 wt.% stearic acid, in relation to the total weight of the copper-containing flakes coated with stearic acid. The inventors of the present invention further found that the multi-layer lamellar structure of the copper-containing flakes and each of the above properties reinforce each other resulting in a synergistic effect and thus allow sintering within an even shorter sintering time, at an even lower sintering pressure and/or at an even lower sintering temperature, if the copper-containing flakes have not only a multi-layer lamellar structure, but also fulfill two of the above properties or even three of the above properties compared to copper-containing flakes having no lamellar structure, in particular having no multi-layer lamellar structure, or compared to copper-containing flakes only having a multi-layer lamellar structure but not fulfilling any one of the above properties or compared to copper-containing flakes having a multi-layer lamellar structure but not fulfilling all of the above properties.

The copper-containing flakes may have a total oxygen content in a range of 3 wt.% to 8 wt.%, in particular in a range of 4 wt.% to 7.9 wt.%, in particular in a range of 4.1 wt.% to 7.5 wt.%, in particular in a range of 4.2 wt.% to 7 wt.%, in particular in a range of 4.3 wt.% to 6.5 wt.%, in particular in a range of 4.4 wt.% to 6 wt.%, in particular in a range of 4.5 wt.% to 5.5 wt.%, in particular in a range of 4.6 wt.% to 5 wt.%. In the context of the present invention, the total oxygen content of the copper-containing flakes refers to oxygen atoms in any form, e.g. in the form of copper oxide on the surface of the flakes, as well as the oxygen content of the copper-containing flakes themselves. If the copper-containing flakes are coated with stearic acid, the total oxygen content also refers to the oxygen content of the stearic acid coating of the copper-containing flakes. However, the oxygen content only refers to the oxygen content of the copper-containing flakes, optionally coated with stearic acid, as such, and thus does not include the oxygen in the space between the copper-containing flakes.

The organic binder may be a terpineol, a primary alcohol, a diol, a triol, a polymeric glycol or a mixture of at least two of a terpineol, a primary alcohol, a diol, a triol and a polymeric glycol. In particular, the terpineol forming the organic binder may be an alpha-terpineol. The alpha-terpineol may be an (R)-(+)-alpha-terpineol, an (S)-(-)-alpha-terpineol or a mixture an (R)-(+)-alpha-terpineol and an (S)-(-)-alpha-terpineol. The (R)-(+)-alpha-terpineol and/or the (S)-(-)-alpha-terpineol may each have independently from each other a purity of at least 90 %, in particular at least 93 %. The primary alcohol forming the organic binder may be 1-butanol or 1-octanol. The diol forming the organic binder may be a diol having an average molar mass of at least 60 g/mol and at most 110 g/mol, in particular ethylene glycol, diethylene glycol, propylene glycol or butylene glycol. The triol forming the organic binder may be a triol having an average molar mass of at least 75 g/mol and at most 110 g/mol, in particular glycerol. The polymeric glycol forming the organic binder may be a polymeric ethyl glycol having an average molar mass of at least 200 g/mol, in particular at least 300 g/mol, in particular at least 400 g/mol, in particular at least 500 g/mol, in particular at least 550 g/mol, and at most 800 g/mol, in particular at most 750 g/mol, in particular at most 700 g/mol, in particular at most 650 g/mol.

In the sintering process, the organic binder usually evaporates or decomposes. During the evaporation or decomposition of the diol and/or the polymeric glycol, a reducing atmosphere is created which prevents the oxidation of the copper to copper oxide without the requirement of providing an additional protective gas atmosphere to be applied from the outside. Therefore, the diol and/or the polymeric glycol in the composition according to the invention enables the *in situ* reduction of Cu oxides during the sintering process with little effort. Thus, the organic binder, in particular the polymeric glycol, in particular the polymeric glycol having an average molar mass of at least 550 g/mol and at most 650 g/mol, has a reducing effect on the copper-containing flakes.

In contrast to polymeric glycols, in particular polymeric ethyl glycol, in particular polymeric ethyl glycol having an average molar mass of more than 200 g/mol, the evaporation of the diol, in particular the diol having an average molar mass of at least 60 g/mol and at most 110 g/mol, and the evaporation of the primary alcohol, in particular 1-butanol and 1-octanol, is achieved at a relatively low temperature, in particular at a temperature of at most 200 °C. For example, the evaporation of ethylene glycol is achieved at a temperature of 197 °C. For example, the evaporation of 1-butanol is achieved at a temperature of 117,7 °C. For example, the evaporation of 1-octanol is achieved at a temperature of 195 °C. In order to evaporate the polymeric ethyl glycol, a relatively high temperature of at least 200 °C is necessary. However, evaporation of the binder at a relatively high temperature might result in undesirable gas bubbles formed during sintering, which can weaken the bond. With a mixture of ethylene glycol and alpha-terpineol, it is also possible to achieve the combined effect of producing fewer gas bubbles during heating, while at the same time making use of the reducing atmosphere.

In one embodiment of the invention, the organic binder may be a mixture of ethylene glycol and alpha-terpineol. In another embodiment of the invention, the organic binder may be a mixture of alpha-terpineol, ethylene glycol and polyethylene glycol. In this mixture, the total weight of the alpha-terpineol in relation to the total weight of the organic binder may be 80 wt.%, the total weight of the ethylene glycol in relation to the total weight of the organic binder may be 18 wt.% and the total weight of the polyethylene glycol in relation to the total weight of the organic binder may be 2 wt.%. In another embodiment of the invention, the organic binder may be a mixture of alpha-terpineol, polyethylene glycol and glycerol. In this mixture, the total weight of the alpha-terpineol in relation to the total weight of the organic binder may be 80 wt.%, the total weight of the polyethylene glycol in relation to the total weight of the organic binder may be 19.5 wt.%, and the total weight of the glycerol in relation to the total weight of the organic binder may be 0.5 wt.%.

In a further embodiment of the invention, the organic binder may be a mixture of ethylene glycol, alpha-terpineol, polyethylene glycol and glycerol. The inventors of the present invention found that a mixture of alpha-terpineol, ethylene glycol and polyethylene glycol, a mixture of alpha-terpineol, polyethylene glycol and glycerol, and a mixture of ethylene glycol, alpha-terpineol, polyethylene glycol and glycerol results in a composition allowing a relatively fast pre-drying without drying out the composition according to the invention. This results in a relatively high paste stability, in particular a relatively high paste stability after pre-drying, and a relatively long work life of the composition according to the invention, in particular of the composition according to the invention after pre-drying, of up to one week. Furthermore, a sufficient tacking of the composition according to the invention to the first substrate and/or the second substrate is enabled even after pre-drying of the composition and thus, no additional tacking agent needs to be provided in the composition according to the invention. Furthermore, placement of the second substrate at relatively low temperatures, in particular at ambient temperature, is enabled.

A total content of solids in the composition according to the invention may be at most 80 wt.%, in particular at most 75 wt.%, in particular at most 70 wt.%, in particular at most 65 wt.%, in particular at most 63 wt.%, in particular at most 60 wt.%, in particular at most 55 wt.%, in particular at most 50 wt.%. Thus, the total content of solids in the composition according to the invention is considerably lower compared to silver sintering pastes having a total content of solids of about 90 wt.%. A relatively low total content of solids results in a relatively low viscosity of the composition according to the invention. The viscosity of the composition according to the invention may be in the range of 100.000 mPas to 400.000 mPas, in particular in the range of 150.000 mPas to 350.000 mPas, in particular in the range of 200.000 mPas to 300.000 mPas. The viscosity of the composition according to the invention may be measured at room temperature, in particular at 20 °C, using a standard viscosimeter, in particular a standard classical rotational viscosimeter, in particular the Thermo Scientific^{™} HAAKE^{™} Viscotester^{™} C. These rotational viscometers measure the resistance of the composition according to the invention against a preset speed. The resulting torque or resistance is a measure for the viscosity of the composition according to the invention. The higher the torque, the higher the viscosity. The low viscosity of the composition according to the invention enables its easy processability and a good and its even spreadability on the first solid substrate and/or the second solid substrate.

The total weight of the copper-containing flakes, optionally coated with stearic acid, in relation to the total weight of the composition according to the invention may be at most 80 wt.%, in particular at most 75 wt.%, in particular at most 70 wt.%, in particular at most 65 wt.%, in particular at most 63 wt.%, in particular at most 60 wt.%, in particular at most 55 wt.%, in particular at most 50 wt.%, in particular at most 45 wt.%. The remaining part of the composition may be formed by the organic binder. This means that the total weight of the organic binder in relation to the total weight of the composition according to the invention may be at least 20 wt.%, in particular at least 25 wt.%, in particular at least 30 wt.%, in particular at least 35 wt.%, in particular at least 37 wt.%, in particular at least 40 wt.%, in particular at least 45 wt.%, in particular at least 50 wt.%, in particular at least 55 wt.%. The total weight of the copper-containing flakes, the organic binder and/or the optional stearic acid coated on the copper-containing flakes can each be determined by nuclear magnetic resonance spectroscopy, thermogravimetric analysis, mass spectrometry and infrared spectroscopy. The total weight of the copper-containing flakes, the organic binder and/or the optional stearic acid coated on the copper-containing flakes can be determined by weighing the copper-containing flakes, the organic binder and/or the optional stearic acid before forming the composition according to the invention.

A method for forming the copper-containing flakes comprises the steps of grinding and/or milling of copper particles or copper alloy particles. If copper-containing flakes coated with stearic acid shall be obtained, the grinding and/or milling of copper particles or copper alloy particles is performed in the presence of stearic acid. The grinding and/or milling can be performed for example in a ball mill. The copper-containing flakes are obtained during grinding and/or milling of the copper particles or copper alloy particles. The copper-containing flakes coated with stearic acid are obtained during grinding and/or milling of the copper particles or copper alloy particles in the presence of stearic acid. During the grinding and/or the milling of the copper particles or copper alloy particles in the presence of stearic acid, the total weight of the stearic acid in relation to the total weight of the copper particles or the copper alloy particles may be relatively low. Furthermore, the total number of individual grinding and/or milling steps of the copper particles or copper alloy particles in the presence of stearic acid may be relatively low. In particular, the total number of individual grinding and/or milling steps of the copper particles or copper alloy particles in the presence of stearic acid may be at most three, in particular at most two, in particular at most one, respectively. This enables the obtaining of copper-containing flakes coated with stearic acid, wherein the total weight of the stearic acid in relation to the total weight of the copper-containing flakes coated with stearic acid is at most 1.5 wt.%. The total weight of the stearic acid coated on the copper-containing flakes in relation to the total weight of the copper-containing flakes coated with stearic acid can be determined by nuclear magnetic resonance spectroscopy, thermogravimetric analysis, Rutherford backscattering spectrometry, mass spectrometry, infrared spectroscopy, Raman spectroscopy and X-ray spectroscopy in combination with nuclear magnetic resonance spectroscopy.

A method for forming the composition according to the invention comprises the steps of providing the organic binder and the copper-containing flakes, optionally coated with stearic acid, and mixing the organic binder and the copper-containing flakes, optionally coated with stearic acid, for obtaining the composition according to the invention.

The invention also concerns a method for forming a copper-containing interlayer between a first solid substrate and a second solid substrate. The method comprises the steps of
a) providing the composition according to the invention, providing a first substrate and providing a second substrate,
b) applying the composition according to the invention to the first substrate,
c) placing the second substrate on the composition according to the invention,
d) applying a bonding pressure to press the first substrate and the second substrate against one another, wherein the bonding pressure is at least 100 kPa, in particular at least 1 MPa, in particular at least 2.5 MPa, in particular at least 5 MPa, in particular at least 7.5 MPa, and at most 40 MPa, in particular at most 35 MPa, in particular at most 30 MPa, in particular at most 25 MPa, in particular at most 20 MPa, in particular at most 15 MPa, in particular at most 10 MPa,
e) heating the composition on the first substrate or the first substrate and/or the second substrate together with the composition to a sintering temperature in the range of 200 °C to 300 °C, in particular in the range of 205 °C to 275 °C, in particular in the range of 210 °C to 270 °C, in particular in the range of 215 °C to 265 °C, in particular in the range of 220 °C to 260 °C, in particular in the range of 225 °C to 255 °C, in particular in the range of 230 °C to 250 °C, in particular in the range of 235 °C to 245 °C, and maintaining the sintering temperature and the bonding pressure until a copper-containing interlayer between the first substrate and the second substrate is formed.

Applying the composition according to the invention to the first substrate may be performed by coating, in particular doctor blade coating, by printing, in particular stencil printing or screen printing, or by cartridge dispensing.

Placing the second substrate on the composition according to the invention may be performed manually, by substrate transfer, in particular by vacuum-mediated substrate transfer, or by means of a pick-and-place machine.

After applying the composition according to the invention to the first substrate and placing the second substrate on the composition according to the invention and before applying the bonding pressure to press the first substrate and the second substrate against one another, the composition on the first substrate or the first substrate and/or the second substrate together with the composition may be heated to a pre-drying temperature in the range of 80 °C to 160 °C, in particular in the range of 90 °C to 150 °C, in particular in the range of 100 °C to 140 °C, in particular in the range of 110 °C to 130 °C. The pre-drying temperature may be maintained for at least 30 seconds, in particular at least 1 minute, in particular at least 2 minutes, in particular at least 3 minutes and for at most 8 minutes, in particular at most 6 minutes, in particular at most 5 minutes, in particular at most 4 minutes. Heating the composition on the first substrate or the first substrate and/or the second substrate together with the composition to the pre-drying temperature and maintaining the pre-drying temperature may be performed in a reducing atmosphere, in an inert atmosphere, in an atmosphere containing oxygen and/or in a vacuum. Heating the composition on the first substrate or the first substrate and/or the second substrate together with the composition to the pre-drying temperature may be performed after step c) and before step d).

The sintering temperature and the bonding pressure may be maintained for at least 1 second, in particular for at least 5 seconds, in particular for at least 30 seconds, in particular for at least 1 minute, in particular for at least 3 minutes, in particular for at least 4 minutes, and for at most 30 minutes, in particular for at most 15 minutes, in particular for at most 10 minutes, in particular for at most 8 minutes, in particular for at most 5 minutes.

The method according to the invention may further comprise a step f) of cooling the copper-containing interlayer obtained in step e) between the first substrate and the second substrate or the first substrate and/or the second substrate together with the copper-containing interlayer obtained in step e) to a cooling temperature in the range of 15 °C to 40 °C, in particular in the range of 20 °C to 30 °C. The cooling temperature may be ambient temperature. Cooling according to step f) may be performed by active cooling but usually is passive cooling, i. e. by letting the copper-containing interlayer or the first substrate and/or the second substrate together with the copper-containing interlayer cool down to the cooling temperature which usually is ambient temperature.

At least step e), in particular at least steps e) and d), in particular at least steps c) to e), in particular at least steps b) to e), in particular steps a) to e), of the method according to the invention may be performed in a reducing atmosphere or in an inert atmosphere. Optionally, step f) may be performed in a reducing atmosphere or in an inert atmosphere. The reducing atmosphere may be provided by means of a mixture of evaporated formic acid and nitrogen gas or by means of a gas mixture of hydrogen and an inert gas. The gas mixture of hydrogen and the inert gas may be a gas mixture of nitrogen and hydrogen or a gas mixture of argon and hydrogen. The inert atmosphere may be provided by means of an inert gas. The inert gas may be contained in an inert gas mixture. The inert gas may be nitrogen gas, carbon dioxide gas, helium gas, neon gas or argon gas. The inert gas mixture may be a mixture of at least two of nitrogen gas, carbon dioxide gas, helium gas, neon gas and argon gas. The inventors of the present invention found that sintering in an inert atmosphere or in a reducing atmosphere, in particular sintering by means of a mixture of evaporated formic acid and nitrogen gas, results in relatively high arithmetic average shear strength value of the resulting copper bond, in particular in an arithmetic average shear strength value in the range of 20 MPa to 50 MPa, in particular in the range of 30 MPa to 40 MPa.

The inventors of the present invention found that at least step e), in particular at least steps e) and d), in particular at least steps c) to e), in particular at least steps b) to e), in particular steps a) to e), of the method according to the invention may be performed in an atmosphere containing oxygen. Optionally, step f) may be performed in an atmosphere containing oxygen. The atmosphere containing oxygen in the method according to the invention may be provided by means of a gas mixture containing oxygen and nitrogen. The gas mixture containing oxygen and nitrogen may be air. The inventors of the present invention found that the composition according to the invention provides a relatively good conductivity of the copper bond after sintering due to relatively low oxide impurities. The oxide impurities are so low that it is not necessary to apply a reducing atmosphere during sintering.

During step e), at least 70 wt.%, in particular at least 75 wt.%, in particular at least 80 wt.%, in particular at least 85 wt.%, in particular at least 90 wt.%, in particular at least 95 wt.%, in particular at least 99 wt.%, in particular 100 wt.% of the initial weight of the organic binder may be evaporated. The initial weight of the organic binder can be determined by weighing of the organic binder before providing/preparing the composition according to the invention. The evaporation of the organic binder can be determined either by weighing of the first substrate and/or the second substrate together with the composition during or before and after the heating according to step e) and/or by mass spectrometry or thermal gravimetric analysis.

At least step e), in particular at least steps e) and d), in particular at least steps c) to e), in particular at least steps b) to e), in particular steps a) to e), of the method according to the invention may be performed in a vacuum. Optionally, step f) may be performed in a vacuum. The inventors of the present invention found that sintering in a vacuum results in a further evaporation of the organic binder at a relatively low temperature due to a vacuum-induced reduction of the boiling point of the organic binder. The further evaporation of the organic binder further improves the sintering efficiency of the composition according to the invention and contributes to sintering at a relatively low sintering temperature.

Furthermore, sintering of the composition according to the invention by the method according to the invention avoids a relatively high surface irregularity and a relatively high inhomogeneity of a copper containing bond. Therefore, the composition according to the invention enables a relatively good surface control by ensuring a relatively low surface roughness. The relatively low surface roughness and relatively good surface control of the composition according to the invention is enabled by a relatively low total weight of the organic binder in relation to the total weight of the composition according to the invention. Furthermore, sintering of the composition according to the invention results in a relatively thin copper-containing interlayer/interconnect layer between the two solid substrates. Since the composition according to the invention comprises a relatively low total weight of the organic binder after sintering of the composition according to the invention, the properties of the resulting copper-containing interlayer/interconnect layer formed by the sintered composition are similar to the properties of bulk elementary metal, in particular of bulk copper. Thus, the copper-containing interlayer/interconnect layer shows a relatively high electrical conductivity and a relatively high thermal conductivity. If the elementary metal forming the copper-containing flakes is a copper alloy, a good thermal conductivity during the sintering and a good electrical conductivity after sintering is enabled, which can both be further increased if the elementary metal forming the copper-containing flakes is elemental copper.

Sintering of the composition according to the invention by the method according to the invention ensures relatively high shear strength values of the resulting bonds. Despite the relatively low content of solids, the shear strength values are similar to the shear strength values achievable with commercial silver sintering pastes with a content of solids of about 90 wt.%. Due to the relatively low content of solids and since silver is relatively expensive compared to copper, material costs can be saved by using the composition according to the invention. In addition, the composition according to the invention enables a relatively energy-efficient production of a copper bond. Despite these differences to commercial silver sintering pastes, the sintering process of the composition according to the invention is compatible with industrialized silver sintering lines. Thus, a simple exchange of the commercial silver sintering pastes with the composition according to the invention is possible.

The first substrate may be made of or consist of a metal or a metal oxide and the second substrate may be made of or consist of the metal, a further metal, the metal oxide, a further metal oxide or a surface mount device component. The metal or the further metal may be gold, silver, nickel, copper, pre-treated copper or tin. The metal oxide or the further metal oxide may be aluminum oxide. The surface mount device component may be a capacitor, a chip resistor, a crystal oscillator, a diode, a fuse, an inductor, an integrated circuit, an LED, a network resistor, a transformer, a transistor, a silicon carbide (SiC) device or a gallium nitride (GaN) device. The diode may be a silicon diode. The transistor may be a metal-oxide semiconductor field-effect transistor (MOSFET). The inventors of the present invention found that the organic binder can also reduce oxides on the first and/or the second substrate. Therefore, the composition according to the invention enables sintering on copper, silver and/or nickel substrates even if these substrates are covered by an oxide layer.

The pre-treated copper may be pre-treated for example by coating a copper substrate with an organic surface protection (OSP) layer, wherein the OSP layer protects the copper against oxidation and is dissolved during the soldering process. Alternatively, other methods, e.g. sol-gel application or CVD, can be used to coat the copper substrate with a protective layer in order to protect the copper against oxidation.

The invention further concerns the use of the composition according to the invention for forming a copper-containing interlayer/interconnect layer between two surfaces of solid substrates, in particular for die-attach bonding, in microelectronics packaging, in electric vehicle technologies, in hybrid electric vehicle technologies, in high power electronics packaging, and/or in thick film technology. In particular, the invention concerns the use of the composition according to the invention for die-attach bonding. The invention further concerns the use of the composition according to the invention for forming a conductive path on a solid substrate. The conductive path on the solid substrate may be an electrically and/or a thermally conductive path on the solid substrate. The invention further concerns the use of the composition according to the invention for substrate attachment. The microelectronics packaging may be WBG semiconductor packaging. The high power electronics packaging may be high power light emitting diode packaging. The inventors of the present invention found that the use of the composition according to the invention for forming a copper-containing interlayer/interconnect layer between two solid substrates or for forming a conductive path on a solid substrate enables a relatively low thermal load of the solid substrate(s) and any electronic component, in particular the surface mount device component as specified above, on the substrate(s) when forming the interconnection layer or conductive path. This is due to the relatively low sintering temperature required to sinter the composition according to the invention.

If the composition according to the invention is used for forming an electrically and/or thermally conductive path on a solid substrate, the solid substrate may be any substrate defined above as first or second substrate as far as it is not an electrically conductive first or second substrate. If the composition according to the invention is used for substrate attachment, the substrate may be any substrate defined above as first or second substrate, an aluminum substrate, in particular a metallized aluminum substrate, in particular a copper-metallized aluminum substrate, a ceramic substrate, in particular a metallized ceramic substrate, in particular a copper-metallized ceramic substrate, a directed bonded copper substrate or a polymer substrate, in particular a polyimide substrate.

All features indicated in the specification are to be understood as features applicable to all embodiments of the invention. This means, for example, that a feature indicated for the composition according to the invention can also be applied to the method for forming the copper-containing flakes, the method for forming the composition according to the invention, the method for forming a copper-containing interlayer between the first solid substrate and the second solid substrate according to the invention, and/or the use according to the invention, and vice versa. Furthermore, as far as not otherwise specified, the term "average" always means "arithmetic average" and the term "mean" always means "arithmetic mean". The abbreviation "wt.%" means "percent by weight".

The invention will be explained in more detail with reference to the following embodiments.
- Fig. 1): shows a cross-section of copper flakes comprising internal pores,
- Fig. 2): shows a cross-section of copper flakes having a multi-layer la-mellar structure,
- Figs. 3a) and 3b): show scanning transmission electron microscopy images of a multi-layer lamellar structure and
- Fig. 4): shows a cross-section of an interconnect resulting from sintering of a composition comprising copper flakes comprising internal pores.

### Example 1: Mean intraparticle pore density and mean interparticle cavity density of the copper-containing flakes

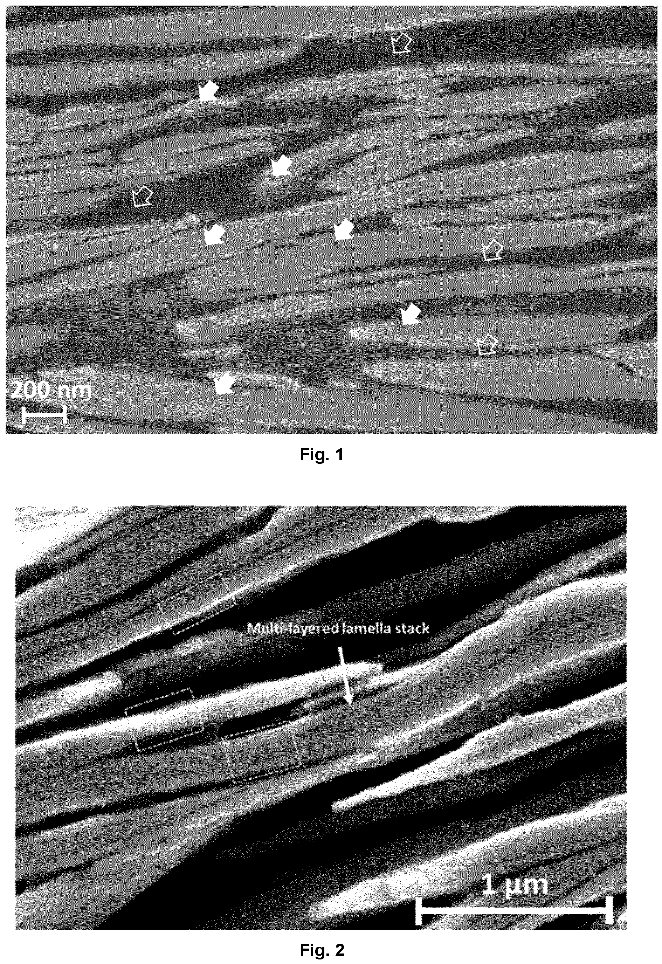

The composition according to the invention comprises copper-containing flakes comprising internal pores. Exemplarily, these copper-containing flakes comprising internal pores can be purchased as Cubrotec 8001 copper flakes, which are offered by the company Carl Schlenk SE, Germany. A cross-section of the Cubrotec 8001 copper flakes is shown in Fig. 1. In Figs. 1, a number of internal pores of the copper flakes are exemplarily shown by filled arrows. Space between the flakes resulting in interparticle cavities after sintering are exemplarily shown by unfilled arrows.

As can be seen in Fig. 1, the Cubrotec 8001 copper flakes have a relatively high number of internal pores. Exemplarily, the Cubrotec 8001 copper flakes have a mean intraparticle pore density of 30 internal pores/µm² Thus, the Cubrotec 8001 copper flakes have a relatively high mean intraparticle pore density. The space between the Cubrotec 8001 copper flakes is 40 %. Furthermore, as can be seen in Fig. 1, the Cubrotec 8001 copper flakes have a multi-layer lamellar structure.

### Example 2: Copper-containing flakes having a multi-layer lamellar structure

The copper-containing flakes have a multi-layer lamellar structures. A cross-section of the Cubrotec 8001 copper flakes showing the multi-layer lamellar structure of the copper flakes is shown in Fig. 2. In Figs. 2, the stack-like multi-layer lamellar structure is shown in white dotted boxes for three copper flakes, exemplarily. The multi-layer lamellar structures each consist of varying numbers of lamellas ranging from 1 to 20 lamellas. Furthermore, the multi-layer lamellar structures have a varying total thickness in the range of 20 nm to 400 nm.

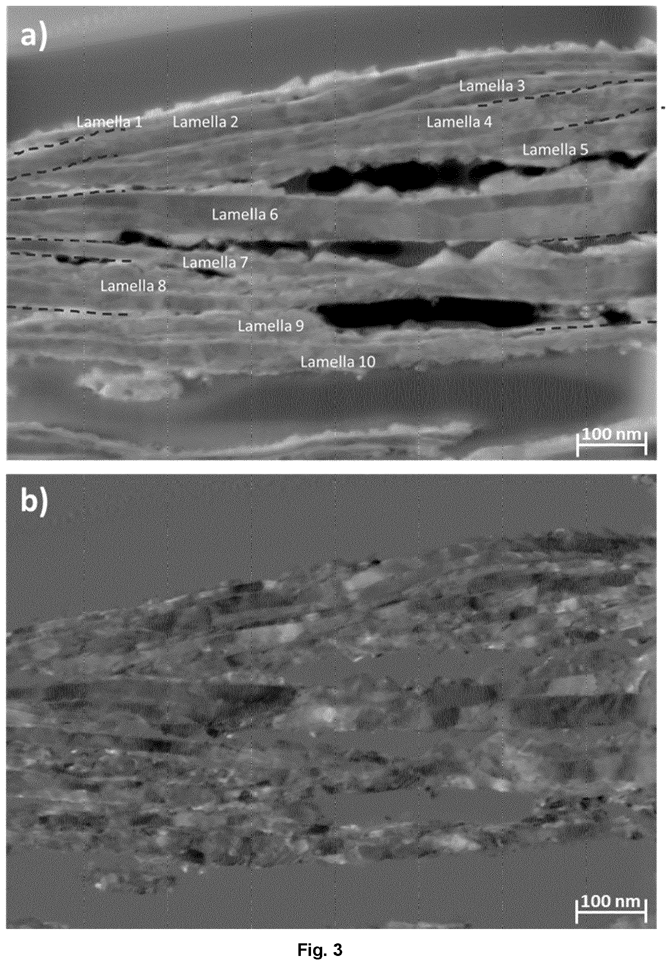

In Figs. 3a and 3b, scanning transmission electron microscopy (STEM) images of a multi-layer lamellar structure exemplarily consisting of ten lamellas is shown. In Fig. 3a, the lamellar boundaries between the lamellas (lamellas 1 to 10) in the stack-like multi-layer lamellar structure are exemplarily shown by black dotted lines. In this regard, for example lamella 1 is in contact with lamella 2 by one lamellar boundary. However, lamella 2 is in contact with both lamella 1 and lamella 3 by one lamellar boundary each, etc. This results in the stack-like multi-layer lamellar structure consisting of lamellas in contact with each other. Furthermore, in Fig. 3b, the nanocrystalline structure of the copper forming the lamellas in the stack-like multi-layer lamellar structure is shown.

### Example 3: Compositions

The following compositions were tested:

**Table 1: Paste compositions**

| **Paste No.** | **Paste composition (wt.%)** | | | | | | | **Total content of solids in composition (wt.%)** |
|---|---|---|---|---|---|---|---|---|
| | **(Coate d) copper flakes** | **Stearic acid coating** | **Total weight of the stearic acid in relation to the total weight of the flakes coated with stearic acid** | **Organic binder** | | | | |
| | | | | **Ethylene glycol** | **Alphaterpineol** | **Polyethylene glycol 600** | **Glycerol** | |
| **1** | 63 | - | - | 37 | - | - | - | 63 |
| **2** | 60 | + | 1.5 | 16 | 24 | - | - | 58.5 |
| **3** | 60 | + | 1.5 | 15.5 | 24 | 0.5 | - | 58.5 |
| **4** | 60 | + | 1.5 | 15 | 24 | 0.5 | 0.5 | 58.5 |
| **5** | 75 | + | 0.5 | 10 | 15 | - | - | 74.5 |
| **6** | 75 | + | 0.5 | 12 | 12.5 | 0.5 | - | 74.5 |
| **7** | 75 | + | 0.5 | 12 | 12 | 0.5 | 0.5 | 74.5 |
| **8** | 62.5 | + | 1.5 | - | 30 | 7.5 | - | 61 |
| **9** | 76 | + | 0.5 | - | 19.2 | 4.8 | - | 75.5 |

Table 1 shows different sintering pastes and their respective compositions. Each of the sintering pastes from compositions No. 1 to No. 9 contained Cubrotec 8001 copper flakes comprising internal pores. As can be seen in Table 1, the sintering pastes from composition No. 1 does not contain copper flakes coated with stearic acid. The sintering pastes from compositions No. 2 to No. 9 contain copper flakes coated with stearic acid.

In each of the sintering pastes from compositions No. 1 to No. 9, the total weight of the copper flakes, optionally coated with stearic acid, in relation to the total weight of the composition is in the range of 60 wt.% to 76 wt.%. The total weight of the copper flakes coated with stearic acid includes the total weight of the stearic acid coated on the copper flakes and the total weight of the copper flakes. For example, in composition No. 2, 60 wt.% copper flakes coated with stearic acid comprises 58.5 wt. % copper flakes and 1.5 wt. % stearic acid coated on the copper flakes. Thus, the total content of solids in composition No. 2 is 58.5 wt.%. Furthermore, the organic binder in composition No. 2 is a mixture of ethylene glycol and alpha-terpineol. In this regard, the total weight of the ethylene glycol in relation to the total weight of the composition is 16 wt.% and the total weight of the alpha-terpineol to the total weight of the composition is 24 wt.%. Thus, composition No. 2 comprises a total weight of organic binder in relation to the total weight of the composition of 40 wt.%.

### Example 4: Sintering paste production

In the following, the formulation of the sintering pastes from compositions No. 1 and No. 3 are exemplarily shown. The formulation of the sintering paste from composition No. 1 comprises the following steps:
In a planetary rotary mixer, 63 g of copper flakes are added. Subsequently, 37 g of ethylene glycol as exemplary organic binder are added to the copper flakes and mixed for 4 min at 500 rpm.

The formulation of the sintering paste from composition No. 3 comprises the following steps:
15.5 g of ethylene glycol, 24 g of alpha-terpineol and 0.5 g of PEG 600 are mixed in a beaker with magnetic stirrer for 3 min at 500 rpm. Thus, the organic binder is obtained. In a planetary rotary mixer, 60 g of stearic acid-coated copper flakes comprising of 58.5 g copper flakes and 1.5 g of stearic acid coated on the copper flakes are added. Subsequently, the obtained organic binder is added to the copper flakes and mixed for 4 min at 500 rpm.

### Example 5: Sinter process and sintering bond strength

The sintering pastes from example 3 are each stencil printed on a copper substrate (30 mm x 30 mm x 1.5 mm) using a PBT-Uniprint-PMGo3v semi-automatic stencil printer equipped with a motorized double blade squeegee and a stencil thickness of 75 µm. Exemplarily, the squeegee speed is 13 mm/s, the squeegee pressure is 20 N and the stencil separation is 2.3 mm/s. The printing is performed as a double stroke printing.

Subsequently, a two-step sintering process comprising an optional pre-drying step is performed. First, pre-drying of the stencil printed compositions in a convection oven is performed in a nitrogen gas atmosphere or in air. The pre-drying is exemplarily performed for 5 minutes at 100 °C. In this regard, the inventors of the present invention found that compositions No. 3, 4, 6 and 7 comprising either an organic binder mixture of ethylene glycol, alpha-terpineol and polyethylene glycol or an organic binder mixture of ethylene glycol, alpha-terpineol, polyethylene glycol and glycerol allow a rapid pre-drying without completely drying the paste and provide a sufficient tacking and a relatively high paste stability with a work life of up to one week after pre-drying. In contrast to that, conventional sinter pastes provide a work life of approximately 8 hours.

After the printing of the compositions or after the printing and the optional pre-drying of the compositions, metal-oxide semiconductor field-effect transistor (MOSFET) chips with silver metallization are applied on the stencil printed, and optionally pre-dried, compositions using a Fineplacer^{®} Sigma bonder with a bonding chamber with 0.1 N force.

After chip placement, sintering in a Fineplacer^{®} Sigma bonder is performed. Exemplarily, sintering is performed for 5 minutes at a sintering temperature of 260 °C under the application of 15 MPa bonding pressure in an open bond chamber with a constant flow of nitrogen. Sintering temperature is reached at a heating rate of 1 K/s. An initial contact force of 5 N is applied followed by a ramp up to final bonding force of 500 N at the rate of 1 N/s with active force control. The bond chamber contains residual oxygen. Alternatively, sintering can also be performed in an industrial sinter press, e.g. the budatec SP 300 sinter press, in an inert atmosphere with <200 ppm oxygen. Prior to introducing nitrogen into the bond chamber, the bond chamber is evacuated two times to obtain a 10 mbar vacuum. In this case, the sintering temperature is reached very rapidly since the top and bottom plates are already heated.

After sintering, the bonding force is released and the copper substrates, the sintered compositions and the chips are exemplarily cooled to a temperature of 40 °C at a cooling rate of 1 K/s. The sintering bond strength of the sintered copper bonding is measured by a shear test. The shear test is performed according to MIL-STD-883E test method standard for microcircuits using a XYZTec Condor Sigma Lite shear tester with a shear height of 25 µm and a shear speed of 200 µm/s.

The results are given in the following table:

**Table 2: Shear strength values of the sintered copper bondings**

| **Paste No.** | **Sintering paste composition** | | | **Arithmetic average shear strength value (MPa)** |
|---|---|---|---|---|
| | **(Coated) copper flakes** | **Total weight of stearic acid in relation to the total weight of the flakes coated with stearic acid (wt.%)** | **Organic binder** | |
| **1** | Copper flakes | - | Ethylene glycol | 27 |
| **2** | Coated copper flakes | 1.5 | Ethylene glycol + alpha-terpineol | 40 |
| **3** | Coated copper flakes | 1.5 | Ethylene glycol + alpha-terpineol + polyethylene glycol | 35 |
| **4** | Coated copper flakes | 1.5 | Ethylene glycol + alpha-terpineol + polyethylene glycol + glycerol | 32 |
| **5** | Coated copper flakes | 0.5 | Ethylene glycol + alpha-terpineol | 36 |
| **6** | Coated copper flakes | 0.5 | Ethylene glycol + alpha-terpineol + polyethylene glycol | 40 |
| **7** | Coated copper flakes | 0.5 | Ethylene glycol + alpha-terpineol + polyethylene glycol + glycerol | 42 |
| **8** | Coated copper flakes | 1.5 | Alpha-terpineol + Polyethylene glycol | 50 |
| **9** | Coated copper flakes | 0.5 | Alpha-terpineol + Polyethylene glycol | 48 |

In Table 2, the sintering bond strength of the sintered copper bonding is given as mean of arithmetic average shear strength values. As can be seen in Table 2, the sintering bond strength of the sintered copper bonding from compositions No. 1 to No. 7 show arithmetic average shear strength values in the range of 27 MPa to 50 MPa.

Furthermore, the arithmetic average shear strength values of the sintered copper bonding from compositions No. 2 to No. 9 comprising stearic acid-coated copper flakes are higher compared to the arithmetic average shear strength value of the sintered copper bonding from composition No. 1 comprising uncoated copper flakes.

### Example 6: Mean intraparticle pore density and mean interparticle cavity density after sintering

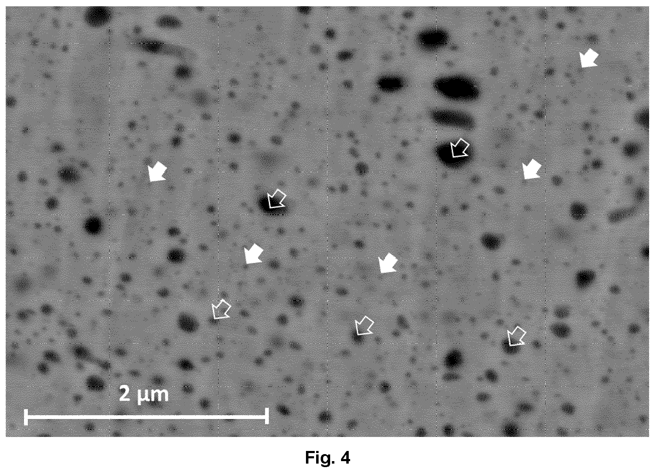

After sintering of the composition according to the invention, the mean intraparticle pore density and the mean interparticle cavity density of the formed copper-containing interlayer/interconnect layer was determined by analyzing cross-sections of the formed copper-containing interlayer/interconnect layer. A cross-section of an interconnect obtained by sintering of a composition comprising Cubrotec 8001 copper flakes is shown in Fig. 4. In Fig. 4, a number of internal pores are exemplarily shown by filled arrows and a number of interparticle cavities are exemplarily shown by unfilled arrows.

As can be seen by comparing Fig. 1 and Fig. 4, the mean intraparticle pore density in the interconnect is not affected by sintering of the copper particles. The interconnect obtained by sintering of a composition comprising Cubrotec 8001 copper flakes has a mean intraparticle pore density that is identical or nearly identical to the mean intraparticle pore density of the non-sintered copper flakes. In this regard, the interconnect obtained by sintering of a composition comprising Cubrotec 8001 copper flakes has a relatively high number of internal pores. However, due to sintering, the space between the copper flakes results in a mean interparticle cavity density of the interconnect that is reduced compared to the space between the non-sintered copper flakes. This can be attributed to sinter neck formation, grain growth and coarsening of the copper flakes during sintering. In addition, measurements of the resistance against thermo-mechanical fatigue showed that the interconnect obtained by sintering of a composition comprising copper flakes with a relatively high mean intraparticle pore density show a higher resistance against thermo-mechanical fatigue compared to interconnects obtained by sintering of compositions comprising copper flakes with a relatively low mean intraparticle pore density. At the same time, the thermal and electrical conductivity of the interconnects is not negatively affected by the increased number of internal pores.

## Claims

1. A composition for forming a copper-containing interlayer between a first solid substrate and a second solid substrate which composition comprises or consists of the following components:
An organic binder and copper-containing flakes of elementary metal, wherein the copper-containing flakes comprise internal pores, wherein the copper-containing flakes have a multi-layer lamellar structure.

2. Composition according to claim 1, wherein the elementary metal forming the copper-containing flakes is copper or a copper alloy, in particular bronze or brass.

3. Composition according to claims 1 or 2, wherein the copper-containing flakes have a mean particle size D50 determined by laser granulometry of at most 5 µm.

4. Composition according to any of the preceding claims, wherein the copper-containing flakes comprising internal pores have a mean intraparticle pore density in a range of 10 internal pores/µm² to 30 internal pores/µm², in particular in a range of 15 internal pores/µm² to 20 internal pores/µm², in an arbitrary section through any of the flakes.

5. Composition according to any of the preceding claims, wherein the multi-layer lamellar structure comprises or consists of at least two and of at most 20 lamellas, wherein any one of the lamellas has independently from each other a thickness in the range of 5 nm to 20 nm.

6. Composition according to any of the preceding claims, wherein the copper-containing flakes are coated with stearic acid, wherein the total weight of stearic acid in relation to the total weight of the copper-containing flakes coated with stearic acid is at most 1.5 wt.%.

7. Composition according to any of the preceding claims, wherein the copper-containing flakes have a total oxygen content in a range of 4.1 wt.% to 7.5 wt.%.

8. Composition according to any of the preceding claims, wherein the organic binder is a terpineol, a primary alcohol, a diol, a triol, a polymeric glycol or a mixture of at least two of a terpineol, a primary alcohol, a diol, a triol and a polymeric glycol.

9. Composition according to claim 8, wherein the terpineol is an alpha-terpineol, and wherein the primary alcohol is 1-butanol or 1-octanol, and wherein the diol is a diol having an average molar mass of at least 60 g/mol and at most 110 g/mol, in particular ethylene glycol, diethylene glycol, propylene glycol or butylene glycol, and wherein the triol is a triol having an average molar mass of at least 75 g/mol and at most 110 g/mol, in particular glycerol, and wherein the polymeric glycol is a polymeric ethyl glycol having an average molar mass of at least 200 g/mol, in particular at least 550 g/mol, and at most 700 g/mol, in particular at most 650 g/mol.

10. Composition according to any of the preceding claims, wherein a total content of solids in the composition is at most 80 wt.%, in particular at most 63 wt.%.

11. Composition according to any of the preceding claims, wherein the total weight of the copper-containing flakes is at most 80 wt.%, in particular at most 60 wt.%, of the total weight of the composition, wherein the total weight of the organic binder is at least 20 wt.%, in particular at least 40 wt.%, of the total weight of the composition.

12. A method for forming a copper-containing interlayer between a first solid substrate and a second solid substrate, the method comprising the steps of
a) providing the composition according to any of claims 1 to 11, providing a first substrate and providing a second substrate,
b) applying the composition to the first substrate,
c) placing the second substrate on the composition,
d) applying a bonding pressure to press the first substrate and the second substrate against one another, wherein the bonding pressure is at least 100 kPa and at most 40 MPa,
e) heating the composition on the first substrate or the first substrate and/or the second substrate together with the composition to a sintering temperature in a range of 200 °C to 300 °C and maintaining the sintering temperature and the bonding pressure until a copper-containing interlayer between the first substrate and the second substrate is formed.

13. Method according to claim 12, wherein the sintering temperature is in a range of 215 °C to 265 °C, in particular in a range of 225 °C to 255 °C, and wherein the bonding pressure is at least 1 MPa, in particular at least 5 MPa, and at most 25 MPa, in particular at most 10 MPa, and/or wherein the sintering temperature and the bonding pressure are maintained for at least 1 second, in particular for at least 30 seconds, and for at most 30 minutes, in particular for at most 5 minutes.

14. Method according to claim 12 or 13, wherein at least step e) is performed in an inert atmosphere.

15. Use of the composition according to any of claims 1 to 11 for forming a copper-containing interlayer between two surfaces of solid substrates, for forming a conductive path on a solid substrate or for substrate attachment.
